(19) Europäisches Patentamt
European Patent Office
Office européen des brevets

(11) **EP 4 242 583 A1**

(12) **EUROPEAN PATENT APPLICATION**
published in accordance with Art. 153(4) EPC

(43) Date of publication:
**13.09.2023 Bulletin 2023/37**

(21) Application number: **21888925.1**

(22) Date of filing: **15.09.2021**

(51) International Patent Classification (IPC):
**G01C 3/06** (2006.01)      **G01S 7/4915** (2020.01)

(52) Cooperative Patent Classification (CPC):
**G01C 3/06; G01S 7/4915**

(86) International application number:
**PCT/JP2021/033842**

(87) International publication number:
**WO 2022/097372 (12.05.2022 Gazette 2022/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.11.2020 JP 2020185115**

(71) Applicant: **Sony Group Corporation
Tokyo 108-0075 (JP)**

(72) Inventor: **OTSUKA, Junji
Tokyo 108-0075 (JP)**

(74) Representative: **MFG Patentanwälte
Meyer-Wildhagen Meggle-Freund
Gerhard PartG mbB
Amalienstraße 62
80799 München (DE)**

(54) **INFORMATION PROCESSING DEVICE, INFORMATION PROCESSING METHOD, AND INFORMATION PROCESSING PROGRAM**

(57)    To provide an information processing device, an information processing method, and an information processing program which are capable of calculating the distance between a photographing position and a target with higher accuracy, and thus, are new and improved.
[Solving Means]
An information processing device includes an acquisition section that acquires a signal value of a corresponding pixel where the same target is located in each of multiple frames which are obtained when a subject is photographed over multiple time sections, and a distance calculation section that calculates the distance between the photographing position and the target on the basis of the signal values acquired by the acquisition section.

FIG.10

EP 4 242 583 A1

## Description

[Technical Field]

The present disclosure relates to an information processing device, an information processing method, and an information processing program.

[Background Art]

In recent years, a technology of estimating the three-dimensional position of a target is developed. For example, NPL 1 discloses a technology of estimating the three-dimensional position of a target by using DNN (Deep Neural Network) on the basis of a depth image.

[Citation List]

[Patent Literature]

[NPL 1]
Jonathan Tompson, et. al, "Real-Time Continuous Pose Recovery of Human Hands Using Convolutional Networks," ACM Transactions on Graphics, [Online], [Retrieved on October 6, 2020], <http://yann.lecun.com/exdb/publis/pdf/tompson-siggraph-14.pdf>

[Summary]

[Technical Problem]

In a case where a depth image is used for DNN learning as in the technology disclosed in NPL 1, it is important to increase the quality of the depth image in order to increase the accuracy of estimating a three-dimensional position.

For example, RAW images taken at different time points are integrated to generate a depth image for use to estimate a three-dimensional position. However, due to displacement of the position of a target in the RAW images, it is difficult to calculate the distance between a photographing position and the target with high accuracy.

To this end, the present disclosure proposes a new and improved information processing device capable of calculating the distance between a photographing position and a target with higher accuracy.

[Solution to Problem]

The present disclosure provides an information processing device including an acquisition section that acquires a signal value of a corresponding pixel where the same target is located in each of multiple frames which are obtained when a subject is photographed over multiple time sections, and a distance calculation section that calculates a distance between a photographing position and the target on the basis of the signal values acquired by the acquisition section.

Further, the present disclosure provides an information processing method that is performed by a computer. The method includes acquiring a signal value of a corresponding pixel where the same target is located in each of multiple frames which are obtained when a subject is photographed over multiple time sections, and calculating a distance between a photographing position and the target on the basis of the acquired signal values.

Moreover, the present disclosure provides an information processing program for causing a computer to function as an acquisition section that acquires a signal value of a corresponding pixel where the same target is located in each of multiple frames which are obtained when a subject is photographed over multiple time sections, and a distance calculation section that calculates a distance between a photographing position and the target on the basis of the signal values acquired by the acquisition section.

[Brief Description of Drawings]

[FIG. 1]

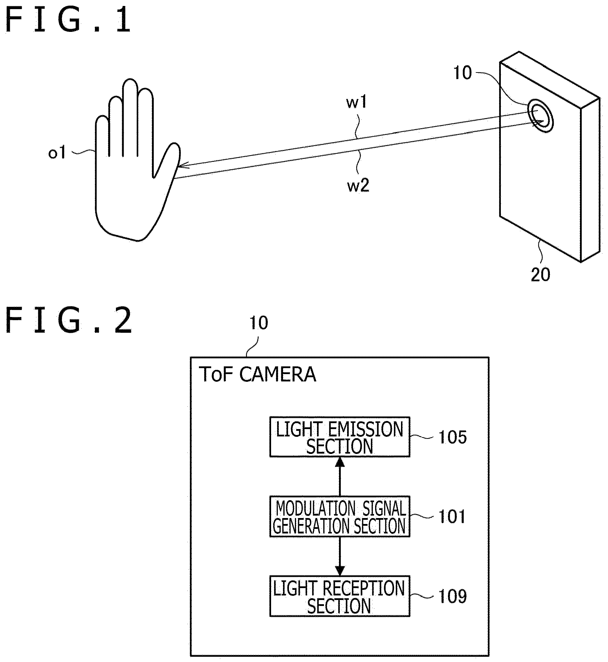

FIG. 1 is an explanatory diagram for explaining the general outline of an information processing system according to the present disclosure.
[FIG. 2]
FIG. 2 is a block diagram for explaining a functional configuration of a ToF camera 10.
[FIG. 3]

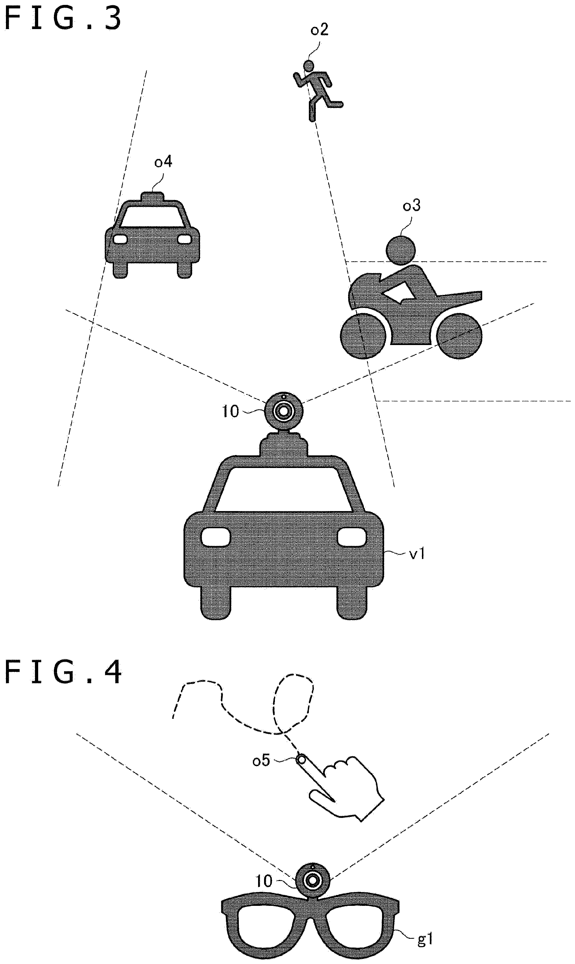

FIG. 3 is an explanatory diagram for explaining a utilization case of a vehicle v1 on which the ToF camera 10 is mounted.
[FIG. 4]
FIG. 4 is an explanatory diagram for explaining a utilization case of a wearable terminal g1 having the ToF camera 10.
[FIG. 5]

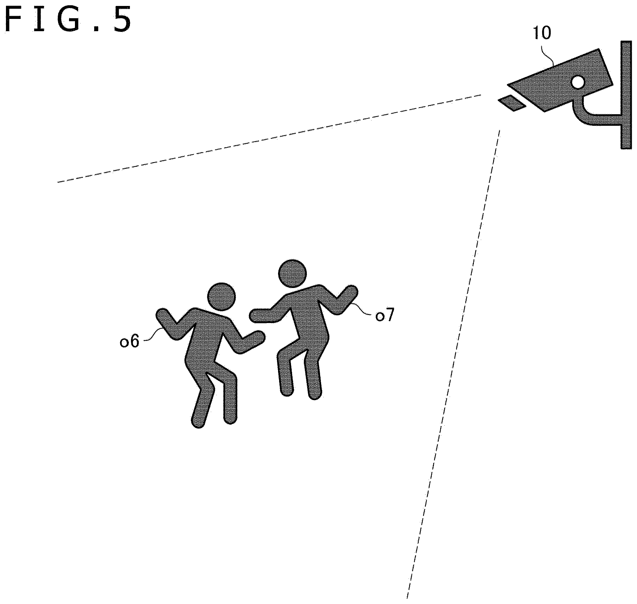

FIG. 5 is an explanatory diagram for explaining a utilization case in which the ToF camera 10 is used as a monitoring camera.
[FIG. 6]

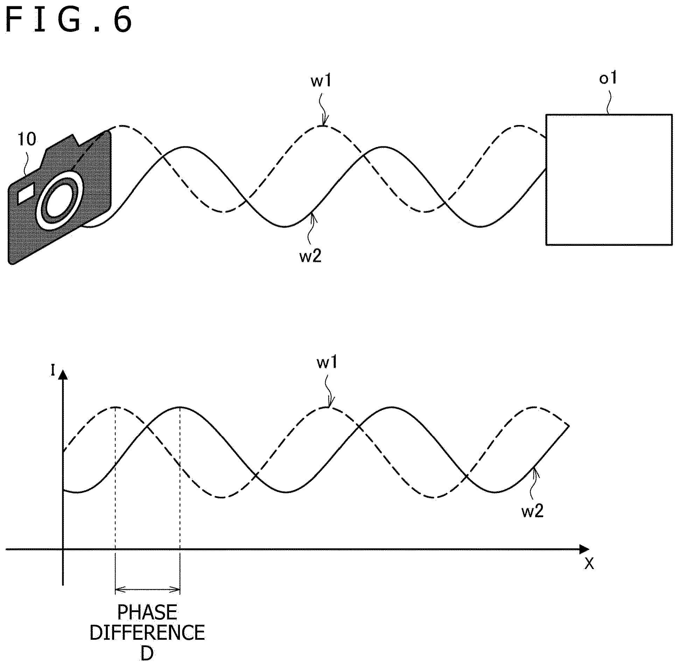

FIG. 6 is an explanatory diagram for explaining the relationship between an emitted wave w1 emitted by a light emission section 105 of the ToF camera 10 and a reflected wave w2 resulting from the emitted wave w1 reflected by a target o1.
[FIG. 7]

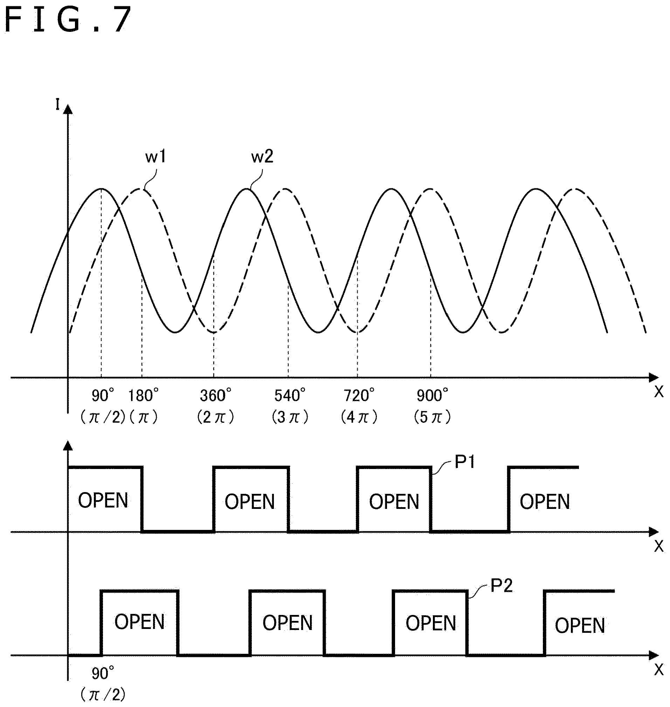

FIG. 7 is an explanatory diagram for explaining one example of a method of acquiring an I-component or Q-component containing signal value from the reflected wave w2 resulting from the emitted wave w1 reflected by the target o1.
[FIG. 8]

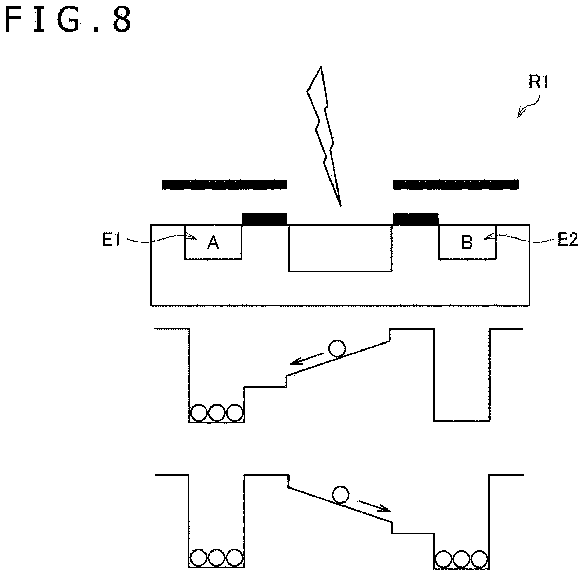

FIG. 8 is an explanatory diagram for explaining one example of a signal value that is acquired, from the reflected wave w2, by a light reception section R1 that is a two-tap sensor type.
[FIG. 9]

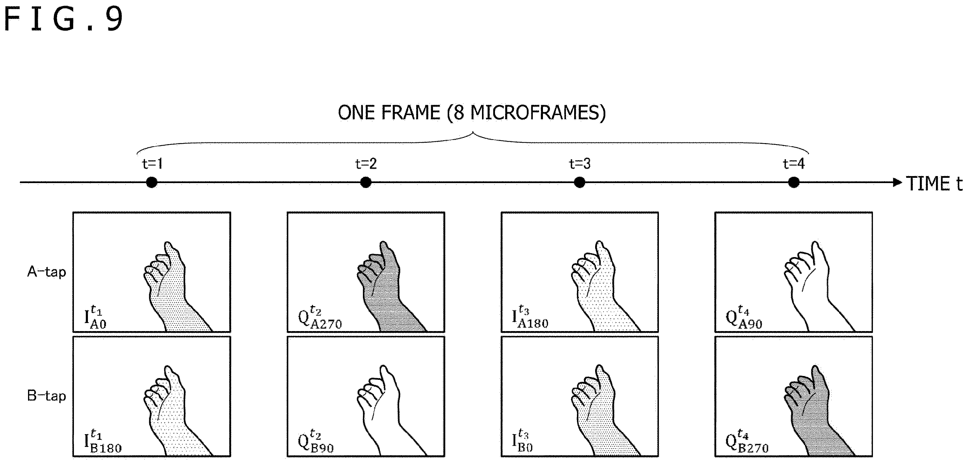

FIG. 9 is an explanatory diagram for explaining one example of signal values which are acquired when the ToF camera 10 having the two-tap sensor type light reception section R1 photographs a subject over four time sections.
[FIG. 10]

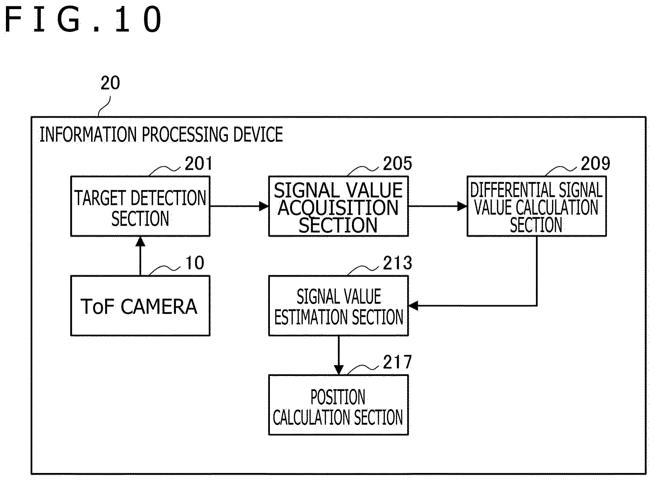

FIG. 10 is a block diagram for explaining a functional configuration of an information processing device 20 according to the present disclosure.
[FIG. 11]

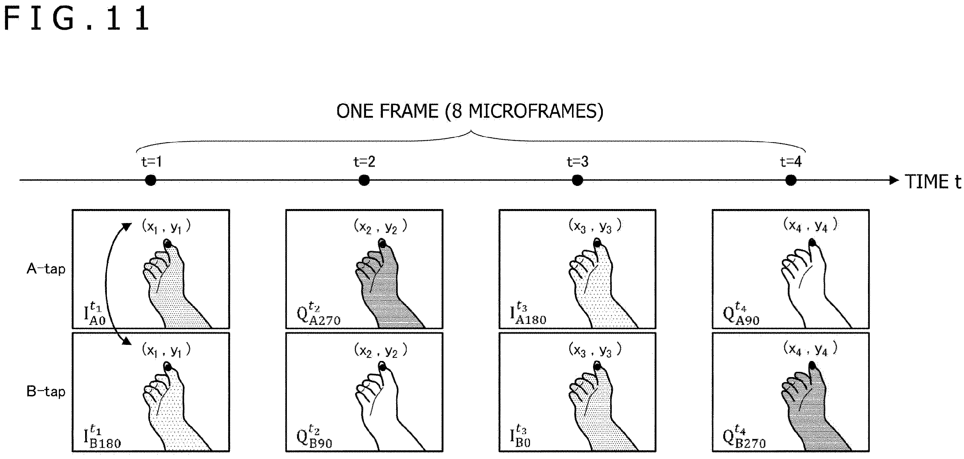

FIG. 11 is an explanatory diagram for explaining one example of photographing a subject over multiple time sections and detecting the same target position in each of the obtained microframes.
[FIG. 12]

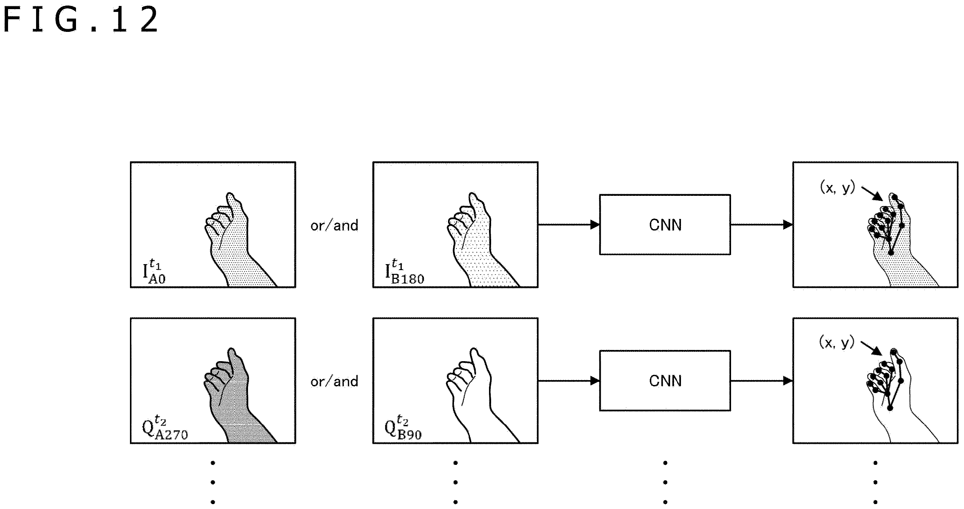

FIG. 12 is an explanatory diagram for explaining a method of detecting a corresponding pixel where the same target is located in each of multiple microframes.
[FIG. 13]

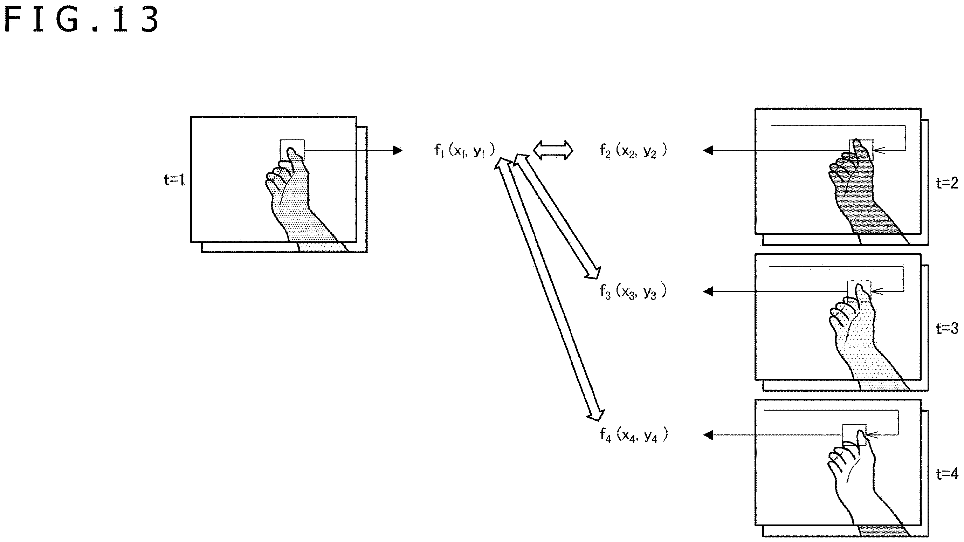

FIG. 13 is an explanatory diagram for explaining a method of calculating a feature amount in each of pixels constituting one microframe and detecting a pixel where the same target is located in another microframe.
[FIG. 14]

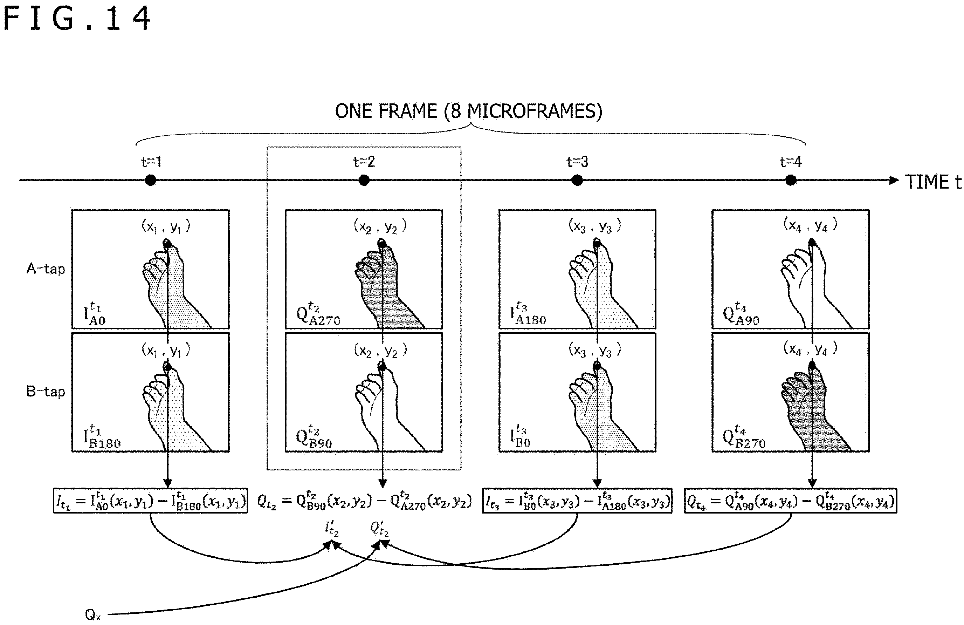

FIG. 14 is an explanatory diagram for explaining the general outline of a method of estimating a differential signal value.
[FIG. 15]

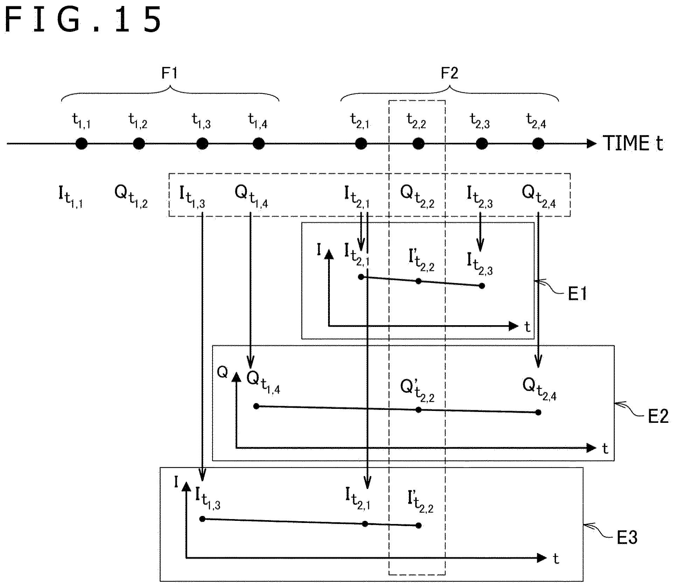

FIG. 15 is an explanatory diagram for explaining one example of a method of estimating a differential signal value.
[FIG. 16]

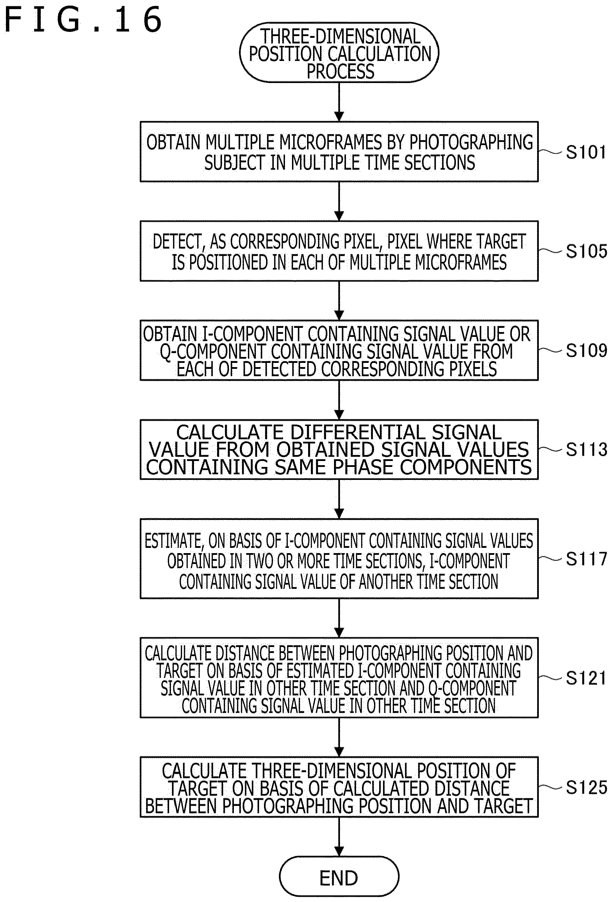

FIG. 16 is an explanatory diagram for explaining operation of an information processing system according to the present disclosure.
[FIG. 17]

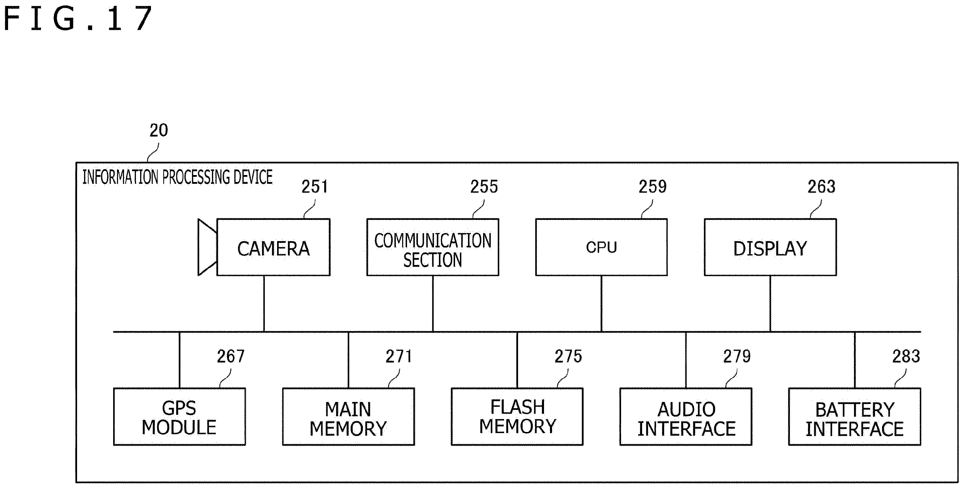

FIG. 17 is a block diagram depicting one example of a hardware configuration of the information processing device 20 according to the present disclosure.

[Description of Embodiment]

Hereinafter, a preferable embodiment of the present disclosure will be explained in detail with reference to the drawings. It is to be noted that components having substantially the same functional structure are denoted by the same reference sign throughout the present description and the drawings, and a redundant explanation thereof will be omitted.

It is to be noted that the explanation will be given in accordance with the following order.

1. General outline

1. 1. General outline of information processing system
1. 2. Utilization case of ToF camera 10
1. 3. Example of method of calculating three-dimensional position of target by using ToF camera 10
1. 4. Background

2. Configuration example
3. Example of operation process
4. Example of effects
5. Hardware configuration example of information processing device 20 according to present disclosure
6. Supplementary explanation

<<1. General outline>>

<1. 1 General outline of information processing system>

One embodiment of the present disclosure relates to an information processing system capable of calculating the distance between a photographing position and a target with higher accuracy. The general outline of the information processing system will be explained below with reference to FIG. 1.

FIG. 1 is an explanatory diagram for explaining the general outline of an information processing system according to the present disclosure. As depicted in FIG. 1, the information processing system according to the present disclosure includes an information processing device 20 equipped with a ToF (Time of Flight) camera 10, for example.

(ToF camera 10)

The ToF camera 10 emits an emitted wave w1 to a target o1, and receives a reflected wave w2 reflected from the target. Specifically, a functional configuration of the ToF camera 10 will be explained with reference to FIG. 2.

FIG. 2 is a block diagram for explaining a functional configuration of the ToF camera 10. As depicted in FIG. 2, the ToF camera 10 includes a modulation signal generation section 101, a light emission section 105, and a light reception section 109.

The modulation signal generation section 101 generates a modulation signal having a sine wave shape, for example. The modulation signal generation section 101 outputs the generated modulation signal to the light emission section 105 and the light reception section 109.

The light emission section 105 emits, to the target o1, the emitted wave w1 generated on the basis of the modulation signal inputted from the modulation signal generation section 101, for example.

The light reception section 109 has a function of receiving the reflected wave w2 which results from the emitted wave w1 emitted from the light emission section 105 and reflected by the target o1, for example.

In addition, the light reception section 109 has a shutter for controlling exposure and multiple pixels arranged in a lattice shape. The light emission section 109 controls an open/close pattern of the shutter on the basis of the modulation signal inputted from the modulation signal generation section 101. Exposure is performed in accordance with the open/close pattern in each of multiple time sections so that each of the pixels in the light reception section 109 acquires a signal value from the reflected wave w2.

A set of the signal values acquired, by the pixels, from the reflected wave w2 received in one time section, forms one microframe. The ToF camera 10 outputs the microframes to the information processing device 20. In the present description, a series of processes from emission of the emitted wave w1 to acquisition of the microframes is referred to as photographing, in some cases.

The functional configuration of the ToF camera 10 has been explained above. Next, the explanation of the information processing system is resumed with reference to FIG. 1.

(Information processing device 20)

The information processing device 20 has a function of acquiring the signal value of a corresponding pixel where the same target o1 is located in each of multiple microframes obtained by photographing the target o1 with the ToF camera 10 over multiple time sections, and of calculating the distance between the photographing position and the target on the basis of the signal value of the corresponding pixel.

It is to be noted that the ToF camera 10 may be integrated with the information processing device 20, or may be formed separately from the information processing device 20.

<1. 2. Utilization case of ToF camera 10>

The ToF camera 10 can be utilized in a variety of cases. Hereinafter, some examples of a conceivable case of the ToF camera 10 will be explained with reference to FIGS. 3 to 5.

FIG. 3 is an explanatory diagram for explaining a utilization case of a vehicle v1 having the ToF camera 10 mounted thereon. In FIG. 3, a target o2 represents a person who is crossing a roadway in front of the vehicle v1, a target o3 represents a motorcycle that is closer to the vehicle v1 than the target o2 and is running out to the front of the vehicle v1, and a target o4 represents another vehicle that is traveling ahead of the vehicle v1. For example, the ToF camera 10 mounted on the vehicle v1 is capable of detecting the position of the target o1 that is crossing the roadway and detecting the target o3 that is running out. In addition, the ToF camera 10 is capable of detecting the distance between the vehicle v1 and the vehicle o4 traveling ahead of the vehicle v1. Accordingly, the ToF camera 10 can be utilized in an automated driving technology, for example.

FIG. 4 is an explanatory diagram for explaining a utilization case of a wearable terminal g1 having the ToF camera 10. In FIG. 4, a target o5 represents a fingertip that is moving in a space. The ToF camera 10 of the wearable terminal g1 is capable of detecting motion of the target o5. For example, the ToF camera 10 is capable of detecting a behavior of writing characters with a fingertip, for example. Accordingly, the ToF camera 10 can be utilized for touchless UIs (User Interfaces), for example.

FIG. 5 is an explanatory diagram for explaining a utilization case in which the ToF camera 10 is used as a monitoring camera. In FIG. 5, targets o6 and o7 represent two persons who are quarreling with a prescribed space therebetween. For example, in a case where the ToF camera 10 is used as a monitoring camera, the ToF camera 10 photographs the targets o6 and o7 from above. Therefore, the ToF camera 10 can monitor the situation of the quarreling on the basis of a change in the distance between the target o6 and the target o7. Accordingly, the ToF camera 10 can be utilized in a crime prevention technology, for example.

Some examples of the conceivable utilization of the ToF camera 10 have been explained above. Next, a method of calculating the three-dimensional position of a target, on the basis of multiple signal values acquired by photographing a subject with the ToF camera 10, will be explained with reference to FIGS. 6 to 9. It is to be noted that, in the present disclosure, a ToF camera of an iToF (indirect Time of Flight) type is simply expressed as the ToF camera 10.

<1. 3. Method of calculating three-dimensional position of target by using ToF camera 10>

FIG. 6 is an explanatory diagram for explaining the relation between the emitted wave w1 emitted by the light emission section 105 of the ToF camera 10 and the reflected wave w2 resulting from the emitted wave w1 reflected by the target o1. The light emission section 105 emits the emitted wave w1 obtained as a result of sinusoidal modulation, for example. Then, the light reception section 109 receives the reflected wave w2 resulting from the emitted wave w1 reflected by the target o1.

A period of time from emission of the emitted wave w1 from the light emission section 105 to reception of the reflected wave w2 resulting from the emitted wave w1 at the light reception section 109, or the light reciprocation period of time is calculated from the phase difference D between the emitted wave w1 and the reflected wave w2. On the basis of the light reciprocation period of time calculated from the phase difference D between the emitted wave w1 and the reflected wave w2, the distance between the ToF camera 10 and the target o1 can be calculated.

In other words, when the phase difference D between the emitted wave w1 and the reflected wave w2 is obtained, the distance between the ToF camera 10 and the target o1 can be calculated. Here, one example of a method of calculating the phase difference D between the emitted wave w1 and the reflected wave w2 will be explained.

First, the light reception section 109 acquires signal values containing different phase components from each of the reflected waves w2 having arrived in multiple time sections. For example, the light reception section 109 acquires a signal value containing, as one example of a first component, an I component (0°-phase, 180°-phase) which is in phase with the emitted wave w1, or a signal value containing, as one example of a second component, a Q component (90°-phase, 270°-phase) which is a quadrature component to the emitted wave w1, in accordance with a time of starting opening/closing the shutter. Hereinafter, one example of a method of acquiring signal values containing different phase components will be explained with reference to FIG. 7.

FIG. 7 is an explanatory diagram for explaining one example of a method for acquiring, from the reflected wave w2 resulting from the emitted wave w1 reflected by the target o1, a signal value containing an I component or a Q component. In FIG. 7, an opening/closing pattern P1 is one example of the shutter opening/closing pattern for acquiring, from the reflected wave w2, a signal value that is in-phase (0°) with the emitted wave w1, and thus, contains an I component, while an opening/closing pattern P2 is one example of the shutter opening/closing pattern for acquiring, from the reflected wave w2, a signal value having a phase which is shifted from the phase of the emitted wave w1 by 90°, and thus, contains a Q component.

By opening/closing the shutter in accordance with the abovementioned opening/closing pattern P1 in a certain time section, the light reception section 109 can acquire, from the reflected wave w2, a signal value containing the I component with respect to the emitted wave w1. It is to be noted that, by opening/closing the shutter in accordance with an opening/closing pattern having a phase shifted by 180° from the phase of the abovementioned opening/closing pattern P1 (i.e., an opening/closing pattern of a phase shifted by 180° from the phase of the emitted wave w1), the light reception section 109 can also acquire, from the reflected wave w2, a signal value containing the I component with respect to the emitted wave w1.

Similarly, by opening/closing the shutter in accordance with the abovementioned opening/closing pattern P2 in another time section, the light reception section 109 can acquire, from the reflected wave w2, a signal value containing the Q component with respect to the emitted wave w1. It is to be noted that, by opening/closing the shutter in accordance with an opening/closing pattern of a phase shifted by 180° from the phase of the abovementioned opening/closing pattern P2 (i.e., an opening/closing pattern of a phase shifted by 270° from the phase of the emitted wave w1), the light reception section 109 can also acquire, from the reflected wave w2, a signal value containing the Q component with respect to the emitted wave w1.

It is to be noted that, in the following explanation, a signal value that contains the I component with respect to the emitted wave w1 and is acquired on the basis of the opening/closing pattern in-phase (0°) with the emitted wave w1 is denoted by $I_0$, while a signal value that contains the I component with respect to the emitted wave w1 and is acquired on the basis of the opening/closing pattern of a phase shifted by 180° from the phase of the emitted wave w1 is denoted by $I_{180}$.

Similarly, a signal value that contains the Q component with respect to the emitted wave w1 and is acquired on the basis of the opening/closing pattern of a phase shifted by 90° from the phase of the emitted wave w1 is denoted by $Q_{90}$, while a signal value that contains the Q component with respect to the emitted wave w1 and is acquired on the basis of the opening/closing pattern of a phase shifted by 270° from the phase of the emitted wave w1 is denoted by $Q_{270}$.

The phase difference D between the emitted wave w1 and the reflected wave w2 is calculated on the basis of the $I_0$, $I_{180}$, $Q_{90}$, and $Q_{270}$ acquired from the reflected waves w2 having arrived in multiple time sections. First, difference I between the signal values $I_0$ and $I_{180}$ each containing the I component and difference Q between the signal values $Q_{90}$ and $Q_{270}$ each containing the Q component are calculated.

$$I = I_0 - I_{180} \quad \text{(Expression 1)}$$

$$Q = Q_{90} - Q_{270} \quad \text{(Expression 2)}$$

Then, on the basis of I and Q calculated in accordance with Expression (1) and Expression (2), the phase difference D is calculated in accordance with Expression (3).

$$D = \arctan (Q/I) \quad \text{(Expression 3)}$$

It is to be noted that, although the signal value of any one of $I_0$, $Q_{90}$, $I_{180}$, and $Q_{270}$ can be acquired from the reflected wave w2 in one time section, two signal values containing the same phase components ($I_0$ and $I_{180}$, or $Q_{90}$ and $Q_{270}$) can also be acquired from the reflected wave w2 in one time section with use of the light reception section 109 that is a two-tap sensor type, for example.

Here, one example of a signal value that is acquired, from the reflected wave w2, by a light reception section R1 that is a two-tap sensor type, will be explained with reference to FIG. 8.

FIG. 8 is an explanatory diagram for explaining one example of a signal value that is acquired, from the reflected wave w2, by the light reception section R1 that uses a two-tap sensor. The light reception section R1 that uses a two-tap sensor includes two electric charge accumulation sections which are an A-tap pixel E1 and a B-tap pixel E2. The light reception section R1 that uses a two-tap sensor has a function of controlling exposure by distributing electric charges. Accordingly, when the target o1 is photographed in the same time section, signal values containing the same phase components can be acquired from the reflected wave w2. Hereinafter, one example of signal values that are acquired when the ToF camera 10 having the two-tap sensor type light reception section R1 photographs a subject, will be explained with reference to FIG. 9.

FIG. 9 is an explanatory diagram for explaining one example of signal values that are acquired when the ToF camera 10 having the two-tap sensor type light reception section R1 photographs a subject over four time sections. For example, in a case where the ToF camera 10 having the two-tap sensor type light reception section R1 photographs a subject in a time section t = 1, the A-tap pixel E1 acquires a microframe $I^{t1}_{A0}$ while the B-tap pixel E2 acquires a microframe $I^{t1}_{B180}$.

Also, in a case where the ToF camera 10 photographs the subject in time sections t = 2 to 4, the two-tap sensor type light reception section R1 respectively acquires signal values the phases of which are shifted by 180° from each other. It is assumed that a set of signal values that are acquired by the A-tap pixel E1 or the B-tap pixel E2 in each time section is regarded as one microframe. For example, a frame indicating a depth image is calculated from a total of eight microframes. It is to be noted that, in each microframe, the density degree of the subject depends on its phase. In addition, in order to clarify the boundary between the background and the subject, the background is indicated in "white." More accurately, however, the background is indicated in "black." The following explanation is based on the assumption that the light reception section 109 in the present disclosure is a two-tap sensor type. However, the light reception section 109 does not need to be a two-tap sensor type.

<1. 4. Background>

In a case where a depth image is calculated from microframes acquired by photographing a subject over multiple time sections, however, the positions of the target in the respective microframes may change. In such a case, due to the positional displacement of the target, it has been difficult to calculate a depth image with high accuracy.

To this end, the information processing device 20 according to one embodiment of the present disclosure is achieved by originality and creativity in order to reduce the effect of positional displacement of a target. Hereinafter, the details of the configuration and operation of the information processing device 20 according to the present disclosure will be explained in order. It is to be noted that, in the following explanation, the emitted wave w1 and the reflected wave w2 are simply abbreviated as an emitted wave and a reflected wave, respectively.

<<2. Configuration example>>

FIG. 10 is a block diagram for explaining a functional configuration of the information processing device 20 according to the present disclosure. As depicted in FIG. 10, the information processing device 20 includes the ToF camera 10, a target detection section 201, a signal value acquisition section 205, a differential signal value calculation section 209, a signal value estimation section 213, and a position calculation section 217.

(Target detection section 201)

The target detection section 201 is an example of the detection section, and has a function of detecting, as a corresponding pixel, a pixel where the same target is located in each of microframes acquired when the ToF camera 10 photographs a subject over multiple time sections.

FIG. 11 is an explanatory diagram for explaining one example of photographing a subject over multiple time sections and detecting the same target position in each of the obtained microframes. The ToF camera 10 photographs a hand which is a subject over time sections t = 1 to 4, for example, so that microframes of each of the time sections are acquired.

For example, in a case where the tip of the thumb is determined as a target and the position of the tip of the thumb moves over the multiple time sections, a pixel where the target is located is changed from a target position (x1, y1) at t = 1 to a target position (x4, y4) at t = 4. That is, the target position (x1, y1) indicates a pixel where the target is not located (e.g. a space where the subject is not located) at t= 4. Accordingly, positional displacement of the target position can be generated among microframes acquired in multiple time sections.

In order to reduce the effect of such positional displacement of the target, the target detection section 201 previously detects, as a corresponding pixel, a pixel where the tip of the thumb is located in each of the microframes, as depicted in FIG. 11. Hereinafter, one example of a method in which the target detection section 201 detects a corresponding pixel will be explained with reference to FIGS. 12 and 13.

FIG. 12 is an explanatory diagram for explaining a method of detecting a corresponding pixel where the same target is located in each of multiple microframes. For example, by using a machine learning technology using CNN (Convolutional Neural Network) or the like, the target detection section 201 may detect a pixel where the target is located in each of microframes acquired when a subject is photographed over multiple microframes.

In addition, the signal value of each of pixels constituting each of microframes, which is indicated by the density degrees in the respective microframe in FIG. 12, varies according to the phase even in a case where the microframes are acquired by photographing in the same time section. For this reason, by using a CNN obtained as a result of learning based on microframes and the positions of a feature pixel in the microframes, for example, the target detection section 210 may detect the position of a corresponding pixel which indicates a pixel where the target is located in each of the microframes. Alternatively, by using a CNN obtained as a result of learning performed for each phase, the target detection section 201 may detect a pixel where the target is located.

For example, the ToF camera 10 photographs a subject in a time section $t_1$ and opens/closes the shutter in accordance with an opening/closing pattern that is in-phase (0°) with an emitted wave so that a microframe $I^{t1}_{A0}$ is acquired, as depicted in FIG. 12. In the acquired microframe $I^{t1}_{A0}$, the target detection section 201 detects the position (x, y) of the corresponding pixel by using a CNN.

Further, the ToF camera 10 photographs a subject in a time section $t_2$ and opens/closes the shutter in accordance with an opening/closing pattern of a phase that is shifted by 270° from the phase of the emitted wave so that a microframe $Q^{t2}_{A270}$ is acquired. In the acquired microframe $Q^{t2}_{A270}$, the target detection section 201 detects the position (x, y) of the corresponding pixel by using a CNN.

In addition, by using a two-tap sensor type, the target detection section 201 may calculate an average microframe by averaging two microframes that are acquired in the same time section and that each contain an I component or a Q component. In the calculated average microframe, the target detection section 201 may detect the position of the corresponding pixel by using a CNN. With such an average microframe, the effect which can vary according to the phase can be reduced.

In addition, by using a two-tap sensor type, the target detection section 201 may calculate a differential microframe indicating the difference between two microframes that are acquired in the same time section and that each contain an I component or a Q component. In the calculated differential microframe, the target detection section 201 may detect the position of the corresponding pixel by using a CNN.

For example, the ToF camera 10 photographs a subject in the time section $t_1$ and opens/closes the shutter in accordance with the opening/closing pattern that is in-phase (0°) with an emitted wave so that the A-tap pixel acquires the microframe $I^{t1}_{A0}$ while the B-tap pixel acquires the microframe $I^{t1}_{B180}$. The target detection section 201 calculates an average microframe $I^{t1}$ of the acquired microframes $I^{t1}_{A0}$ and $I^{t1}_{B180}$, and detects the position (x, y) of the corresponding pixel in the average microframe $I^{t1}$ by using a CNN obtained by learning a feature amount in a target position in the average microframe.

FIG. 13 is an explanatory diagram for explaining a method of calculating a feature amount in each of pixels constituting one microframe and detecting a pixel where the same target is located in another microframe.

For example, the target detection section 201 determines, as a reference microframe, a microframe acquired when a subject is photographed in a certain time section, and calculates a feature amount in each of pixels constituting the reference microframe. Further, for each of the pixels constituting the reference microframe, the target detection section 201 may execute a process of detecting, in each of the microframes acquired when photographing is performed in any other time sections, a pixel having a feature amount equal to or close to the feature amount in the pixel in the reference microframe.

The ToF camera 10 photographs a subject over time sections t = 1 to 4, for example, so that microframes of each of the time sections are acquired, as depicted in FIG. 13. The target detection section 201 determines, as a reference microframe, a microframe acquired in the time section t1, and calculates the feature amount in each of pixels constituting the reference microframe. Further, in the respective microframes acquired in the time sections t = 2 to 4, the target detection section 201 detects a feature amount $f_2$ (x2, y2), a feature amount $f_3$ (x3, y3), and a feature amount $f_4$ (x4, y4) which are equal to or similar to a feature amount $f_1$ (x1, y1) in a pixel where the target is located in the reference microframe.

Then, the target detection section 201 detects, as a corresponding pixel, each of the pixels detected to have the equal or close feature amount.

It is to be noted that the reference microframe and the other microframes may be included in the same frame, or may be included in different frames.

(Signal value acquisition section 205)

The signal value acquisition section 205 is an example of the acquisition section and has a function of acquiring a signal value of a corresponding pixel where the same target detected by the target detection section 201 is located in each of multiple microframes acquired when the ToF camera 10 photographs a subject.

For example, the signal value acquisition section 205 acquires the signal value $I^{t1}_{A0}$ (x1, y1) of the pixel (x1, y1) which is the corresponding pixel in the microframe $I^{t1}_{A0}$ in FIG. 11, and acquires the signal value $I^{t1}_{B180}$ (x1, y1) of the pixel (x1, y1) which is the corresponding pixel in the microframe $I^{t1}_{B180}$ in FIG. 11.

In addition, the signal value acquisition section 205 may be a sensor section that converts a reflected wave received by the light reception section 109 of the ToF camera 10, to an electric signal value. A photographing position in this case indicates the sensor section.

(Differential signal value calculation section 209)

The differential signal value calculation section 209 is an example of the difference calculation section and has a function of calculating a differential signal value that indicates the difference between the signal values in a corresponding pixel in two microframes acquired when the ToF camera 10 photographs a subject in a certain time section.

For example, the differential signal value calculation section 209 calculates a differential signal value $I_{t1}$ (x1, y1) that indicates the difference between the signal value $I^{t1}{}_{A0}$ (x1, y1) of the pixel (x1, y1) which is the corresponding pixel in the microframe $I^{t1}{}_{A0}$ in FIG. 11, and the signal value $I^{t1}{}_{B180}$ (x1, y1) of the pixel (x1, y1) which is the corresponding pixel in the microframe $I^{t1}{}_{B180}$ in FIG. 11.

(Signal value estimation section 213)

The signal value estimation section 213 is one example of the estimation section and has a function of, on the basis of I-component containing signal values acquired in respective two or more time sections, estimating a signal value containing the I component with respect to an emitted wave, which could be obtained from a reflected wave having arrived in another time section.

In addition, the signal value estimation section 213 is one example of the estimation section and has a function of, on the basis of Q-component containing signal values acquired in respective two or more time sections, estimating a signal value containing the Q component with respect to an emitted wave, which could be obtained from a reflected wave having arrived in another time section. Hereinafter, one example of a method of estimating a signal value will be explained with reference to FIGS. 14 and 15.

FIG. 14 is an explanatory diagram for explaining the general outline of a method of estimating a differential signal value. For example, the differential signal value calculation section 209 obtains an I-component containing differential signal value $I_{t1}$ of a corresponding pixel, from a reflected wave having arrived in the time section $t_1$. Further, the differential signal value calculation section 209 obtains a Q-component containing differential signal value $Q_{t2}$, in which the Q component is the other phase component, of the corresponding pixel, from a reflected wave having arrived in the time section $t_2$.

Here, the distance between the photographing position and the target in the time section $t_2$ can be calculated, for example, on the basis of the I-component containing differential signal value $I^{t1}$ obtained from the reflected wave having arrived in the time section $t_1$ and the Q-component containing differential signal value $Q_{t2}$ obtained from the reflected wave having arrived in the time section $t_2$.

Alternatively, the signal value estimation section 213 estimates an I-component containing differential signal value $I'_{t2}$, which could be obtained from the reflected wave having arrived in the time section $t_2$, on the basis of I-component containing differential signal values $I_{t1}$ and $I_{t3}$ obtained from the reflected waves having arrived in the time sections $t_2$ and $t_3$, respectively, for example. Accordingly, the position calculation section 217, which will be described later, can calculate the distance between the photographing position and the target with higher accuracy.

Further, the signal value estimation section 213 may estimate a Q-component containing differential signal value $Q'_{t2}$, which is obtained from the reflected wave having arrived in the time section $t_2$ on the basis of a Q-component containing differential signal value $Q_{t4}$ obtained from the reflected wave having arrived in the time section $t_4$ and a Q-component containing differential signal value $Qx$ obtained in another frame.

Here, one example of a method of estimating an I-component containing differential signal value or Q-component containing differential signal value which could be obtained from the reflected wave having arrived in the time section $t_2$ will be explained with reference to FIG. 15.

FIG. 15 is an explanatory diagram for explaining one example of a method of estimating a differential signal value. In FIG. 15, the ToF camera 10 photographs a subject over multiple time sections $t_{1.1}$ to $t_{2.4}$ and acquires microframes.

Further, the microframes acquired in the time sections $t_{1.1}$ to $t_{2.4}$ are combined to form a frame F1. The microframes acquired in the time sections $t_{2.1}$ to $t_{2.4}$ are combined to form a frame F2. Moreover, an I-component containing differential signal value in a microframe acquired in the time section $t_{1.1}$ is referred to as a differential signal value $I_{t1.1}$. A Q-component containing differential signal value in a microframe acquired in the time section $t_{1.2}$ is referred to as a differential signal value $Q_{1.2}$.

It is to be noted that the time section $t_2$ in FIG. 14 is $t_{2.2}$ in the frame F2. Hereinafter, examples of a method of estimating a differential signal value which could be obtained from a reflected wave having arrived in the time section $t_{2.2}$ and contains an I component or Q component with respect to an emitted wave will be explained in order with reference to estimation examples E1 to E3.

In the estimation example E1, the signal value estimation section 213 estimates the differential signal value $I'_{t2.2}$ which could be acquired from a reflected wave having arrived in the time section $t_{2.2}$ and contains the I component with respect to the emitted wave by, for example, interpolation, on the basis of an I-component containing differential signal value $I_{t2.1}$ acquired from the reflected wave having arrived in the time section $t_{2.1}$ in the frame F2 and an I-component containing differential signal value $I_{t2.3}$ acquired from the reflected wave having arrived in the time section $t_{2.3}$ in the frame F2.

In the estimation example E2, the signal value estimation section 213 estimates a differential signal value $Q'_{t2.2}$ which could be acquired from the reflected wave having arrived in the time section $t_{2.2}$ and contains a Q component with respect to the emitted wave by, for example, interpolation, on the basis of a Q-component containing differential signal value $Q_{t1.4}$ acquired from the reflected wave having arrived in the time section $t_{2.4}$ in the frame F1 and a Q-component containing differential signal value $Q_{t2.4}$ acquired from the reflected wave having arrived in the time section $t_{2.4}$ in the frame F2.

It is to be noted that, in the estimation example E2, a differential signal value contacting two Q components which are the differential signal value $Q_{t2.2}$ calculated by the differential signal value calculation section 209 and the differential signal value $Q'_{t2.2}$ estimated by the signal value estimation section 213 is obtained. In such a way, a differential signal value containing multiple I components or Q components acquired in a certain time section may be integrated by, for example, weighted-averaging. As a result, the effect of noise generated in the differential signal value $Q_{t2.2}$ calculated by the differential signal value calculation section 209 can be reduced.

In each of the abovementioned estimation examples E1 and E2, a method of estimating a signal value by interpolation has been explained. However, for example, extrapolation may be used to estimate a signal value. The estimation example E3 which is one example of a method of estimating a differential signal value by extrapolation will be explained.

In the estimation example E3, the signal value estimation section 213 estimates an I-component containing differential signal value $I_{t2.2}$, which could be acquired from the reflected wave having arrived in the time section $t_{2.2}$ by extrapolation, on the basis of an I-component containing differential signal value $I_{t1.3}$ acquired from the reflected wave having arrived in the time section $t_{1.3}$ in the frame F1 and an I-component containing differential signal value $I_{t2.1}$ acquired from the reflected wave having arrived in the time section $t_{2.1}$ in the frame F2.

Alternatively, the signal value estimation section 213 may receive an input of an I-component containing differential signal value or a Q-component containing differential signal value of a corresponding pixel acquired in a given time section, and may estimate an I-component containing differential signal value or a Q-component containing differential signal value of the corresponding pixel in a certain time section by using a DNN (Deep Neural Network) or an RNN (Recurrent Neural Networks), for example.

It is to be noted that the examples in which differential signal values are inputted and outputted have been explained above, but signal values may be inputted and outputted. Specifically, the signal value estimation section 213 may receive an input of an I-component containing signal value or a Q-component containing signal value of a corresponding pixel acquired in a given time section, and may estimate an I-component containing signal value or a Q-component containing signal value of the corresponding pixel in a certain time section by using a DNN or an RNN.

(Position calculation section 217)

The position calculation section 217 is one example of the distance calculation section, and has a function of calculating the distance between a photographing position and a target on the basis of a signal value of a corresponding pixel containing an I component with respect to an emitted wave and a signal value of the corresponding pixel containing a Q component with respect to the emitted wave. For example, the position calculation section 217 calculates the distance between a photographing position and a target on the basis of an I-component containing differential signal value of a corresponding pixel, which could be acquired from a reflected wave having arrived in a certain time section estimated by the signal value estimation section 213 and a Q-component containing differential signal value of the corresponding pixel acquired from a reflected wave having arrived in the same time section as the certain time section.

For example, the position calculation section 217 calculates the distance between a photographing position and a target on the basis of an I-component containing differential signal value $I'_{t2}$ of a corresponding pixel, which could be acquired from the reflected wave having arrived in the time section $t_2$ estimated by the signal value estimation section 213 and a Q-component containing differential signal value $Q_{t2}$ of the corresponding pixel acquired from the reflected wave having arrived in the time section $t_2$, as depicted in FIG. 14.

Further, the position calculation section 217 may calculate the three-dimensional position of the target on the basis of the calculated distance between the photographing position and the target and the positions of the corresponding pixel in the microframes.

The functional configuration of the information processing device 20 according to the present disclosure has been explained so far. Next, operation of an information processing system according to the present disclosure will be explained with reference to FIG. 16.

<<3. Example of operation process>>

FIG. 16 is an explanatory diagram for explaining operation of the information processing system according to the present disclosure. First, the ToF camera 10 photographs a subject over multiple time sections so that multiple microframes are acquired (S101).

Then, the target detection section 201 detects, as a corresponding pixel, a pixel where a target is located in each of the acquired microframes (S105).

Then, the signal value acquisition section 205 acquires an I-component containing signal value or a Q-component containing signal value of each of the corresponding pixels detected in S105 (S109).

Next, the differential signal value calculation section 209 calculates, as a differential signal value, the difference between signal values of the corresponding pixels which contain the same phase component acquired by photographing in the same time section (S113).

Then, on the basis of the I-component containing differential signal values acquired in each of two or more time sections, the signal value estimation section 213 estimates a differential signal value containing an I component with respect to an emitted wave which could be acquired from a reflected wave having arrived in another time section (S117).

Next, on the basis of the I-component containing differential signal value of the other time section estimated in S117 and the Q-component containing differential signal value of the other time section, the position calculation section 217 calculates the distance between the photographing position and the target (S121).

On the basis of the distance between the photographing position and the target calculated in S121, the position calculation section 217 calculates the three-dimensional position of the target, and the information processing device 20 ends the three-dimensional position calculation process (S125).

The operation of the information processing system according to the present disclosure has been explained so far. Next, effects which are provided by the present disclosure will be explained.

<<4. Example of effects>>

According to the present disclosure having been explained so far, a variety of effects can be obtained. For example, according to the present disclosure, the signal value acquisition section 205 acquires signal values of corresponding pixels where the same target is located, and the effect of displacement of the two-dimensional position of the target, which is generated when a subject is photographed over multiple time sections, can be reduced. Accordingly, the position calculation section 217 can calculate the distance between the photographing position and the target with higher accuracy.

In addition, the signal value estimation section 213 estimates a signal value containing a component in-phase with the phase component of an emitted wave, which could be acquired from a reflected wave having arrived in a certain time section, and the effect of displacement of the two-dimensional position of the target, which is generated when a subject is photographed over multiple time sections, can be reduced. Accordingly, the position calculation section 217 can calculate the distance between the photographing position and the target with higher accuracy.

In addition, the differential signal value calculation section 209 calculates a differential signal value indicating the difference between the signal values of a corresponding pixel in two microframes acquired in the same time section when a subject is photographed, so that fixed pattern noise which is included in the signal values can be reduced.

<<5. Hardware configuration example of information processing device 20 according to present disclosure>>

FIG. 17 is a block diagram depicting one example of a hardware configuration of the information processing device 20 according to the present disclosure. The information processing device 20 can include a camera 251, a communication section 255, a CPU (Central Processing Unit) 259, a display 263, a GPS (Global Positioning System) module 267, a main memory 271, a flash memory 275, an audio interface 279, and a battery interface 283.

The camera 251 is formed as one example of the ToF camera 10 according to the present disclosure. The camera 251 acquires a microframe by emitting a wave to a target and receiving a reflected wave resulting from reflection on the target.

The communication section 255 transmits data held in the ToF camera 10 or the information processing device 20, for example, to an external device.

The CPU 259 functions as a computation processor and a controller, and controls general operation in the information processing device 20 in accordance with various programs. Further, the CPU 259 collaborates with software and the main memory 271 and the flash memory 275, which will be explained later, and, for example, the functions of the target detection section 201, the signal value estimation section 213, and the position calculation section 217, etc. are implemented.

The display 263 is a display device such as a CRT (Cathode Ray Tube) display device, a liquid crystal display (LCD) device, or an OLED (Organic Light Emitting Diode) device. The display 263 converts video data to a video and outputs the video. The display 263 may display a subject video which indicates the three-dimensional position of a target calculated by the position calculation section 217, for example.

The GPS module 267 measures the latitude, longitude, or altitude of the information processing device 20 by using a GPS signal received from a GPS satellite. The position calculation section 217 can calculate the three-dimensional position of the target including information regarding the latitude, longitude, or altitude, by using information obtained by measurement using a GPS signal, for example.

The main memory 271 temporarily stores a program that is used for execution of the CPU 259, and a parameter which varies, if needed, during the execution. The flash memory 275 stores a program, a computation parameter, etc. that are used by the CPU 259.

The CPU 259, the main memory 271, and the flash memory 275 are mutually connected through an internal bus, and are connected to the communication section 255, the display 263, the GPS module 267, the audio interface 279, and the battery interface 283, via an input/output interface.

The audio interface 279 is for connection to another device such as a loudspeaker or an earphone, which generates sounds. The battery interface 283 is for connection to a battery or a battery-loaded device.

<<6. Supplementary explanation>>

The preferable embodiment of the present technology have been explained in detail with reference to the drawings. However, the technical scope of the present disclosure is not limited to the embodiment. It is clear that a person who has an ordinary skill in the art can conceive of various modifications and revisions within the scope of the technical concept set forth in the claims. These modifications and revisions are also considered to be obviously within the technical scope of the present disclosure.

For example, the information processing device 20 does not need to include the target detection section 201. In this case, the position calculation section 217 may calculate the distance between a photographing position and a target acquired by a certain pixel, on the basis of an I-component containing differential signal value calculated for the pixel by the differential signal value calculation section 209 and a Q-component containing differential signal value estimated for the pixel by the signal value estimation section 213. Accordingly, in a situation where displacement of the position of a target can be generated only in the depth direction, the position calculation section 217 can simplify the calculation process while maintaining the accuracy of calculating the distance between the photographing position and the target.

In addition, to detect each of corresponding pixels where multiple targets are located, the target detection section 201 may estimate a signal value of each of the corresponding pixels by using CNN. For example, when noise or occlusion is generated in a signal value, the signal value acquisition section 205 cannot accurately acquire the signal value of a corresponding pixel. Therefore, the target detection section 201 estimates a signal value of a corresponding pixel upon detection of the corresponding pixel so that a signal value in which the effect of occlusion etc. has been reduced can be acquired.

In addition, the information processing device 20 may further include a learning section that leans CNN by using microframes and target positions in the microframes. In this case, the information processing device 20 may estimate the distance between a photographing position and a target by using the CNN learned by the learning section.

In addition, the abovementioned information processing method can be performed by cloud computing. Specifically, a server having the functions of the target detection section 201, the signal value acquisition section 205, the differential signal value calculation section 209, the signal value estimation section 213, and the position calculation section 217 may be provided on a network. In this case, the information processing device 20 transmits microframes to the server, and the server calculates the distance between a photographing position and a target by using the microframes received from the information processing device 20, and transmits a result of the calculation to the information processing device 20.

In addition, it is not necessary to perform the steps of the operation of the information processing system according to the present disclosure in accordance with the time-series order depicted in the drawing. For example, the steps of the operation of the information processing system may be performed in accordance with an order different from that depicted in the drawing.

In addition, a computer program for exerting a function equivalent to that of each of the abovementioned sections of the information processing device 20 can be created in hardware such as the CPU 259, the main memory 271, or the flash memory 275 included in the information processing device 20.

The effects described in the present description are illustrative or exemplary ones, and thus, are not limited. That is, the technology according to the present disclosure can provide any other effect that is obvious to a person skilled in the art from the present description, in addition to or in place of the abovementioned effects.

It is to be noted that the present disclosure includes the following configurations.

(1) An information processing device including:

an acquisition section that acquires a signal value of a corresponding pixel where the same target is located in each of multiple frames which are obtained when a subject is photographed over multiple time sections; and
a distance calculation section that calculates a distance between a photographing position and the target on the basis of the signal values acquired by the acquisition section.

(2)

The information processing device according to (1), in which
the distance calculation section calculates a phase difference between an emitted wave emitted when the subject is photographed and a reflected wave resulting from the emitted wave on the basis of the signal value of the corresponding pixel in each of the multiple frames, and calculates the distance between the photographing position and the target on the basis of the phase difference.

(3) The information processing device according to (2), in which,
from the reflected wave having arrived in at least one time section of the multiple time sections, the acquisition section acquires, as a signal value of the corresponding pixel in a frame acquired in the one time section, a signal value containing a first component with respect to the emitted wave, and, from the reflected wave having arrived in another one of the time sections, the acquisition section acquires, as a signal value of the corresponding pixel in a frame acquired in the other time section, a signal value containing a second component that is orthogonal to the first component with respect to the emitted wave.

(4) The information processing device according to (3), in which,

for each of two or more time sections of the multiple time sections, the acquisition section acquires a signal value containing the first component with respect to the emitted wave from the reflected wave having arrived in the respective two or more time sections,

the information processing device further includes

an estimation section that, on the basis of the signal values acquired in the respective two or more time sections, estimates a signal value containing the first component with respect to the emitted wave, the signal value being a value that could be acquired from the reflected wave having arrived in the other time section, and

the distance calculation section calculates a phase difference between the emitted wave and the reflected wave on the basis of the signal value containing the first component estimated by the estimation section and the signal value containing the second component acquired, by the acquisition section, from the reflected wave having arrived in the other time section, and calculates the distance between the photographing position and the target on the basis of the phase difference.

(5) The information processing device according to (4), further including:
a detection section that detects, as the corresponding pixels, pixels where the same target is located in the respective multiple frames.

(6) The information processing device according to (4), further including:

a detection section that, for each of pixels constituting one frame, executes a process of calculating a feature amount of each of the pixels constituting the one frame and detecting, in another frame, a pixel having a feature amount equal to or close to the calculated feature amount of the pixel, and

the distance calculation section regards, as the corresponding pixels where the same target is located, one of the pixels constituting the one frame and a pixel detected in the other frame by the detection section.

(7) The information processing device according to any one of (4) to (6), in which,
in a case where the subject is photographed over the multiple time sections, the acquisition section acquires, in each of the time sections, two frames in which phases of the reflected waves are shifted by 180 degrees from each other, and acquires the signal value of the corresponding pixel in each of the two frames.

(8) The information processing device according to (7), further including:

a difference calculation section that calculates, for each of the time sections in which the two frames are acquired, a differential signal value which indicates a difference between the signal values in the corresponding pixel in the respective two frames, in which

the distance calculation section calculates the distance between the photographing position and the target on the basis of the differential signal value obtained by the difference calculation section.

(9) The information processing device according to (8), in which,

on the basis of multiple differential signal values each calculated, by the calculation section, from the two frames acquired in the respective two or more time sections, the estimation section estimates a signal value containing the first component with respect to the emitted wave, the signal value being a value that could be acquired from the reflected wave having arrived in the other time section, and

the distance calculation section calculates the distance between the photographing position and the target on the basis of the signal value estimated by the estimation section and the differential signal value obtained, by the difference calculation section, from the two frames acquired in the other time section.

(10) The information processing device according to any one of (3) to (9), in which

the acquisition section is a sensor section that converts the reflected wave to an electric signal value, and

the photographing position is a position of the sensor position.

(11) The information processing device according to any one of (1) to (10), in which
the distance calculation section calculates a three-dimensional position of the subject on the basis of the distances from the photographing position to multiple targets.

(12) An information processing method that is performed by a computer, the method including:

acquiring a signal value of a corresponding pixel where the same target is located in each of multiple frames which are obtained when a subject is photographed over multiple time sections; and
calculating a distance between a photographing position and the target on the basis of the acquired signal values.

(13) An information processing program for causing a computer to function as:

an acquisition section that acquires a signal value of a corresponding pixel where the same target is located in each of multiple frames which are obtained when a subject is photographed over multiple time sections; and
a distance calculation section that calculates a distance between a photographing position and the target on the basis of the signal values acquired by the acquisition section.

[Reference Signs List]

10: ToF camera
20: Information processing device
201: Target detection section
205: Signal value acquisition section
209: Differential signal value calculation section
213: Signal value estimation section
217: Position calculation section

**Claims**

1. An information processing device comprising:

an acquisition section that acquires a signal value of a corresponding pixel where a same target is located in each of multiple frames which are obtained when a subject is photographed over multiple time sections; and
a distance calculation section that calculates a distance between a photographing position and the target on a basis of the signal values acquired by the acquisition section.

2. The information processing device according to claim 1, wherein

the distance calculation section calculates a phase difference between an emitted wave emitted when the subject is photographed and a reflected wave resulting from the emitted wave on a basis of the signal value of the corresponding pixel in each of the multiple frames, and calculates the distance between the photographing position and the target on a basis of the phase difference.

3. The information processing device according to claim 2, wherein,
from the reflected wave having arrived in at least one time section of the multiple time sections, the acquisition section acquires, as a signal value of the corresponding pixel in a frame acquired in the one time section, a signal value containing a first component with respect to the emitted wave, and, from the reflected wave having arrived in another one of the time sections, the acquisition section acquires, as a signal value of the corresponding pixel in a frame acquired in the other time section, a signal value containing a second component that is orthogonal to the first component with respect to the emitted wave.

4. The information processing device according to claim 3, wherein, for each of two or more time sections of the multiple time sections, the acquisition section acquires a signal value containing the first component with respect to the emitted wave from the reflected wave having arrived in each of the two or more time sections,

the information processing device further includes
an estimation section that, on a basis of the signal values acquired in the respective two or more time sections, estimates a signal value containing the first component with respect to the emitted wave, the signal value being a value that could be acquired from the reflected wave having arrived in the other time section, and
the distance calculation section calculates a phase difference between the emitted wave and the reflected wave on a basis of the signal value containing the first component estimated by the estimation section and the signal value containing the second component acquired, by the acquisition section, from the reflected wave having arrived in the other time section, and calculates the distance between the photographing position and the target on a basis of the phase difference.

5. The information processing device according to claim 4, further comprising:

a detection section that detects, as the corresponding pixels, pixels where the same target is located in the respective multiple frames.

6. The information processing device according to claim 4, further comprising:

a detection section that, for each of pixels constituting one frame, executes a process of calculating a feature amount of each of the pixels constituting the one frame and detecting, in another frame, a pixel having a feature amount equal to or close to the calculated feature amount of the pixel, and
the distance calculation section regards, as the corresponding pixels where the same target is located, one of the pixels constituting the one frame and a pixel detected in the other frame by the detection section.

7. The information processing device according to claim 4, wherein,
in a case where the subject is photographed over the multiple time sections, the acquisition section acquires, in each of the time sections, two frames in which phases of the reflected waves are shifted by 180 degrees from each other, and acquires the signal value of the corresponding pixel in each of the two frames.

8. The information processing device according to claim 7, further comprising:

a difference calculation section that calculates, for each of the time sections in which the two frames are acquired, a differential signal value which indicates a difference between the signal values in the corresponding pixel in the respective two frames, wherein
the distance calculation section calculates the distance between the photographing position and the target on a basis of the differential signal value obtained by the difference calculation section.

9. The information processing device according to claim 8, wherein,

on a basis of multiple differential signal values each calculated, by the calculation section, from the two frames acquired in each of the two or more time sections, the estimation section estimates a signal value containing the first component with respect to the emitted wave, the signal value being a value that could be acquired from the reflected wave having arrived in the other time section, and
the distance calculation section calculates the distance between the photographing position and the target on a basis of the signal value estimated by the estimation section and the differential signal value obtained, by the difference calculation section, from the two frames acquired in the other time section.

10. The information processing device according to claim 3, wherein

the acquisition section is a sensor section that converts the reflected wave to an electric signal value, and
the photographing position is a position of the sensor position.

11. The information processing device according to claim 1, wherein
the distance calculation section calculates a three-dimensional position of the subject on a basis of the distances from the photographing position to multiple targets.

12. An information processing method that is performed by a computer, the method comprising:

acquiring a signal value of a corresponding pixel where a same target is located in each of multiple frames which are obtained when a subject is photographed over multiple time sections; and
calculating a distance between a photographing position and the target on a basis of the acquired signal values.

13. An information processing program for causing a computer to function as:

an acquisition section that acquires a signal value of a corresponding pixel where a same target is located in each of multiple frames which are obtained when a subject is photographed over multiple time sections; and
a distance calculation section that calculates a distance between a photographing position and the target on a basis of the signal values acquired by the acquisition section.

# F I G . 1

o1

w1

w2

10

20

# F I G . 2

10

ToF CAMERA

LIGHT EMISSION
SECTION — 105

MODULATION SIGNAL
GENERATION SECTION — 101

LIGHT RECEPTION
SECTION — 109

# FIG.3

# FIG.4

FIG.5

# FIG.6

PHASE
DIFFERENCE
D

# F I G . 7

FIG.8

# F I G . 9

ONE FRAME (8 MICROFRAMES)

t=1    t=2    t=3    t=4

TIME t

A-tap

$I_{A0}^{t_1}$   $Q_{A270}^{t_2}$   $I_{A180}^{t_3}$   $Q_{A90}^{t_4}$

B-tap

$I_{B180}^{t_1}$   $Q_{B90}^{t_2}$   $I_{B0}^{t_3}$   $Q_{B270}^{t_4}$

FIG.10

20

INFORMATION PROCESSING DEVICE

201
TARGET DETECTION
SECTION

205
SIGNAL VALUE
ACQUISITION
SECTION

209
DIFFERENTIAL SIGNAL
VALUE CALCULATION
SECTION

10
ToF CAMERA

213
SIGNAL VALUE
ESTIMATION SECTION

217
POSITION
CALCULATION SECTION

FIG.11

F I G . 1 2

# FIG.13

EP 4 242 583 A1

# FIG.14

ONE FRAME (8 MICROFRAMES)

$$I_{t_1} = I^{t_1}_{A0}(x_1, y_1) - I^{t_1}_{B180}(x_1, y_1)$$

$$Q_{t_2} = Q^{t_2}_{B90}(x_2, y_2) - Q^{t_2}_{A270}(x_2, y_2)$$

$$I_{t_3} = I^{t_3}_{B0}(x_3, y_3) - I^{t_3}_{A180}(x_3, y_3)$$

$$Q_{t_4} = Q^{t_4}_{A90}(x_4, y_4) - Q^{t_4}_{B270}(x_4, y_4)$$

EP 4 242 583 A1

# FIG.15

# FIG.16

```
┌─────────────────────────┐
│   THREE-DIMENSIONAL     │
│ POSITION CALCULATION    │
│       PROCESS           │
└─────────────────────────┘
```

OBTAIN MULTIPLE MICROFRAMES BY PHOTOGRAPHING SUBJECT IN MULTIPLE TIME SECTIONS ⟍ S101

DETECT, AS CORRESPONDING PIXEL, PIXEL WHERE TARGET IS POSITIONED IN EACH OF MULTIPLE MICROFRAMES ⟍ S105

OBTAIN I-COMPONENT CONTAINING SIGNAL VALUE OR Q-COMPONENT CONTAINING SIGNAL VALUE FROM EACH OF DETECTED CORRESPONDING PIXELS ⟍ S109

CALCULATE DIFFERENTIAL SIGNAL VALUE FROM OBTAINED SIGNAL VALUES CONTAINING SAME PHASE COMPONENTS ⟍ S113

ESTIMATE, ON BASIS OF I-COMPONENT CONTAINING SIGNAL VALUES OBTAINED IN TWO OR MORE TIME SECTIONS, I-COMPONENT CONTAINING SIGNAL VALUE OF ANOTHER TIME SECTION ⟍ S117

CALCULATE DISTANCE BETWEEN PHOTOGRAPHING POSITION AND TARGET ON BASIS OF ESTIMATED I-COMPONENT CONTAINING SIGNAL VALUE IN OTHER TIME SECTION AND Q-COMPONENT CONTAINING SIGNAL VALUE IN OTHER TIME SECTION ⟍ S121

CALCULATE THREE-DIMENSIONAL POSITION OF TARGET ON BASIS OF CALCULATED DISTANCE BETWEEN PHOTOGRAPHING POSITION AND TARGET ⟍ S125

```
┌─────────┐
│   END   │
└─────────┘
```

# FIG.17

EP 4 242 583 A1

## INTERNATIONAL SEARCH REPORT

| | International application No. |
| --- | --- |
| | **PCT/JP2021/033842** |

**A. CLASSIFICATION OF SUBJECT MATTER**

*G01C 3/06*(2006.01)i; *G01S 7/4915*(2020.01)i
FI:  G01S7/4915; G01C3/06 120Q

According to International Patent Classification (IPC) or to both national classification and IPC

**B. FIELDS SEARCHED**

Minimum documentation searched (classification system followed by classification symbols)

G01S7/48-7/51; G01S17/00-17/95; G01C3/06;

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2014/132767 A1 (TECHNOLOGY HUB INC.) 04 September 2014 (2014-09-04) paragraphs [0062]-[0065], [0076]-[0079], [0174], [0176], [0177], [0182]-[0184], fig. 3, 24-26, 28, 29 | 1-3, 10-13 |
| Y | paragraphs [0062]-[0065], [0076]-[0079], [0174], [0176], [0177], [0182]-[0184], fig. 3, 24-26, 28, 29 | 4-9 |
| Y | JP 2011-053216 A (SAMSUNG ELECTRONICS CO., LTD.) 17 March 2011 (2011-03-17) paragraphs [0088]-[0096], fig. 12 | 4-9 |
| A | US 2011/0129123 A1 (OVSIANNIKOV Ilia et al.) 02 June 2011 (2011-06-02) entire text, all drawings | 1-13 |
| A | JP 2008-241259 A (FUJIFILM CORP.) 09 October 2008 (2008-10-09) entire text, all drawings | 1-13 |

☐ Further documents are listed in the continuation of Box C.   ☑ See patent family annex.

| | |
| --- | --- |
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| **02 November 2021** | **22 November 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2021/033842**

| Patent document cited in search report | | | Publication date (day/month/year) | Patent family member(s) | | | Publication date (day/month/year) |
|---|---|---|---|---|---|---|---|
| WO | 2014/132767 | A1 | 04 September 2014 | (Family: none) | | | |
| JP | 2011-053216 | A | 17 March 2011 | US | 2011/0051119 | A1 | |
| | | | | paragraphs [0096]-[0102], fig. 12 | | | |
| US | 2011/0129123 | A1 | 02 June 2011 | KR | 10-2011-0059253 | A | |
| JP | 2008-241259 | A | 09 October 2008 | US | 2008/0231832 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JONATHAN TOMPSON.** Real-Time Continuous Pose Recovery of Human Hands Using Convolutional Networks. *ACM Transactions on Graphics,* 06 October 2020, http://yann.lecun.com/exdb/publis/pdf/tompson-siggraph-14.pd